# EUROPEAN PATENT SPECIFICATION

(11) **EP 4 090 855 B1**
(45) Date of publication and mention of the grant of the patent: **03.12.2025**
(21) Application number: 20841934.1
(22) Date of filing: 23.12.2020
(51) Int. Cl.: F16B 21/18

(54) **RETAINING RING DEVICE**
HALTERINGVORRICHTUNG
DISPOSITIF DE RETENUE ANNULAIRE

(30) Priority: 15.01.2020 US 202062961296 P
(43) Date of publication of application: 23.11.2022
(73) Proprietor: Seeger-Orbis GmbH, 61462 Königstein (DE)
(72) Inventor: HOELKE, Stephan, 61118 Bad Vilbel (DE); EIDAM, Kirk, 65520 Bad Camberg (DE)
(74) Representative: Hoffmann Eitle
(86) International application number: PCT/EP2020/087766
(87) International publication number: WO 2021/144132

(56) References cited:
- DE-C- 689 232
- US-A- 4 099 444
- US-A- 4 454 642
- US-A- 5 352 079

## Description

The present disclosure sets forth devices, systems, and methods related to retaining devices used in machines where it is desired to retain various components of the machine on an associated shaft or in housings or bores. It finds particular application in conjunction with a retainer device made of a ring body which has enhanced lug portions and will be described with particular reference thereto. However, it is to be appreciated that the present exemplary embodiment is also amenable to other like applications.

### BACKGROUND

Traditional methods for fastening components and assemblies in housings and on shafts usually involves some type of shaft/housing preparation and multiple components to accomplish the fastening task. In lieu of traditional fastening methods which can be complex and expensive, retaining devices such as retaining rings have been used to fasten assemblies on shafts or in housings/bores. Retaining rings are generally installed into a groove to create a shoulder that retains the assembly on the associated shafts or housings/bores.

Retaining rings are more efficient and cost-effective than traditional fasteners like screws, nuts, bolts, cotter pins, washers, etc., and the like. However, existing retaining rings have experienced issues with balance in machines used for high speed applications that generate high forces during operation. In addition, known retaining ring designs subject the associated shafts on which they are installed to damage during assembly, such as chipping of the shaft surface. Finally, retaining rings existing in the art have been limited to the axial application of associated expansion tools (e.g., pliers) used to assemble the retaining ring with the associated shaft. A retaining device of the prior art is shown in US 4 099 444 A.

It would be desirable to provide a retaining device which addresses the aforementioned and other issues of existing retaining rings.

### BRIEF DESCRIPTION

In one non-limiting embodiment of the present disclosure, a retainer device for assembly with an associated shaft by an associated expansion device is disclosed. The retainer device includes a ring body having a first arcuate leg, a second arcuate leg, and an arcuate bridge portion joining the first and second arcuate legs. A first lug is disposed at one end of the first arcuate leg and a second lug is disposed at one end of the second arcuate leg. The first and second arcuate legs each include a tooth portion having a backed-off end adapted to form a gap with the associated shaft, an undercut portion disposed distanced, preferably above the tooth portion, and a hook cavity with an open end defined by the tooth portion and the undercut portion, where the hook cavity is disposed between the undercut portion and the tooth portion. Moreover, the hook cavities of the first and second lugs are adapted to receive the associated expansion device when the associated expansion device is oriented both axially and radially with respect to the associated shaft.

In a preferred embodiment, the first lug and the second lug are pointing radially outward. In such an embodiment, the undercut-portion of the respective first lug or second lug would be arranged above the respective tooth portion of the respective first lug or second lug; the term "above" being used in the sense of radially outward, because typically retainer devices of this type are being looked at and are being described by the skilled person with the retainer devices being held in such an orientation that the first arcuate leg and the second arcuate leg are above the arcuate bridge that joins the first and second arcuate legs.

In an alternative, likewise preferred embodiment, the first lug and the second lug are pointing radially inward. In such an embodiment, the undercut-portion of the respective first lug or second lug would be arranged below / radially inward from the respective tooth portion of the respective first lug or second lug; the term "below" being used in the sense of radially inward, because typically retainer devices of this type are being looked at and are being described by the skilled person with the retainer devices being held in such an orientation that the first arcuate leg and the second arcuate leg are above the arcuate bridge that joins the first and second arcuate legs.

According to some aspects of the non-limiting embodiment of the presently disclosed retainer device, the undercut portions of the first and second lugs are disposed opposite one another and are separated by an outer gap. This is particularly the case for retainer devices that are intended to be placed on a shaft, especially where the first and second lugs are extending radially outward. According to other aspects, the outer gap between the undercut portions can be adapted to permit the associated expansion tool to engage the hook cavities of the first and second lugs. Moreover, the tooth portions of the first and second lugs can be disposed opposite one another and separated by an inner gap which is smaller than the outer gap separating the undercut portions of the first and second lugs. This is particularly the case for retainer devices that are intended to be placed on a shaft, especially where the first and second lugs are extending radially outward. The inner gap between the tooth portions can further be adapted to restrict downward movement of the associated expansion device.

In a preferred embodiment, where the respective undercut portion is disposed radially inward from the respective tooth portion of the respective first lug and second lug, the undercut portions of the first and second lugs are disposed opposite one another and are separated by an inner gap (a gap arranged radially inward in comparison to an outer gap). According to other aspects, the inner gap between the undercut portions can be adapted to permit the associated expansion tool to be moved from a position above the inner gap through the inner gap towards the center of the retainer device. Moreover, in a preferred embodiment of this embodiment the tooth portions of the first and second lugs can be disposed opposite one another and separated by an outer gap which is lager than the inner gap separating the undercut portions of the first and second lugs. The shape of the first lug and the second lug inbetween the outer gap and the inner gap can be such as to provide an insertion channel for engagement portions of an associated expansion tool, allowing the engagement portions to be moved from outside the retainer device through the insertion channel towards the center of the retainer device. In embodiments where the outer gap is larger than the inner gap, this insertion channel could be designed to have a cross-section that gets smaller towards the center of the retainer device.

In accordance with another aspect of the non-limiting embodiment of the present disclosure, the retainer device further includes an indent formed on an outer surface of one of the first or second lugs. This is particularly the case for retainer devices that are intended to be placed on a shaft, especially where the first and second lugs are extending radially outward.

The indent is generally adapted to indicate a proper orientation of the retainer device.

In accordance with another aspect of the non-limiting embodiment of the present disclosure, the retainer device further includes an indent formed on an inward facing surface of one of the first or second lugs. This is particularly the case for embodiments that have the undercut portion disposed radially inward from the tooth portion. The indent is generally adapted to indicate a proper orientation of the retainer device.

According to an additional aspect of the non-limiting embodiment of the retainer device, the hook cavities of the first and second lugs have a diameter which corresponds to a diameter of an engagement portion of the associated expansion tool. The associated expansion tool can be a pair of pliers and the engagement portion can be a pair of plier tips. Moreover, the diameter of the hook cavities of the first and second lugs can be at least equal to the diameter of the plier tips.

In accordance with the invention, and as defined in claim 1, there is the provision of a retainer device for assembly with an associated shaft by an associated expansion tool, comprising a) a ring body having a first arcuate leg, a second arcuate leg, and an arcuate bridge portion joining the first and second arcuate legs; b) a first lug disposed at one end of the first arcuate leg and a second lug disposed at one end of the second arcuate leg, the first and second arcuate legs each comprising i) a tooth portion having a backed-off end adapted to form a gap with the associated shaft; ii) an undercut portion disposed above the tooth portion; and, iii) a hook cavity with an open end defined by the tooth portion and the undercut portion, the hook cavity being disposed between the undercut portion and the tooth portion; and wherein the hook cavities of the first and second lugs are adapted to receive the associated expansion tool when the associated expansion tool is oriented both axially and radially with respect to the associated shaft.

In accordance with another non-limiting object of the present disclosure, there is the provision of a retainer device for assembly with an associated shaft by an associated expansion tool wherein the undercut portions of the first and second lugs are disposed opposite one another and are separated by an outer gap.

In accordance with another non-limiting object of the present disclosure, there is the provision of a retainer device for assembly with an associated shaft by an associated expansion tool wherein the outer gap between the undercut portions is adapted to permit the associated expansion tool to engage the hook cavities of the first and second lugs.

In accordance with another non-limiting object of the present disclosure, there is the provision of a retainer device for assembly with an associated shaft by an associated expansion tool wherein the tooth portions of the first and second lugs are disposed opposite one another and are separated by an inner gap which is smaller than the outer gap separating the undercut portions of the first and second lugs.

In accordance with another non-limiting object of the present disclosure, there is the provision of a retainer device for assembly with an associated shaft by an associated expansion tool wherein the inner gap between the tooth portions is adapted to restrict downward movement of the associated expansion tool.

In accordance with another non-limiting object of the present disclosure, there is the provision of a retainer device for assembly with an associated shaft by an associated expansion tool further comprising an indent formed on an outer surface of one of the first or second lugs.

In accordance with another non-limiting object of the present disclosure, there is the provision of a retainer device for assembly with an associated shaft by an associated expansion tool wherein the indent is adapted to indicate a proper orientation of the retainer device.

In accordance with another non-limiting object of the present disclosure, there is the provision of a retainer device for assembly with an associated shaft by an associated expansion tool wherein the hook cavities of the first and second lugs have a diameter corresponding to a diameter of an engagement portion of the associated expansion tool.

In accordance with another non-limiting object of the present disclosure, there is the provision of a retainer device for assembly with an associated shaft by an associated expansion tool wherein the associated expansion tool is a pair of pliers and the engagement portion is a pair of plier tips.

In accordance with another non-limiting object of the present disclosure, there is the provision of a retainer device for assembly with an associated shaft by an associated expansion tool wherein the diameter of the hook cavities of the first and second lugs is at least equal to the diameter of the plier tips.

In a preferred embodiment the hook cavity of the first lug has an open end through which the engagement portion of an associated expansion tool can enter into the hook cavity of the first lug. In a preferred embodiment the hook cavity of the second lug has an open end through which the engagement portion of an associated tool can enter into the hook cavity of the second lug. In a preferred embodiment, the open end of the hook cavity of the first lug is facing the open end of the hook cavity of the second lug. Hence if two engagement portions of an associated expansion tool are arranged between the first lug and the second lug, spreading the two engagement portions allows an engagement portion each to pass through the respective open end of the lug next to it and to enter into the hook cavity of the respective lug next to it. Further spreading the engagement portions then leads to a spreading of the lugs.

In a preferred, alternative embodiment, the open end of the hook cavity of the first lug is facing away from the open end of the hook cavity of the second lug. Hence if two engagement portions of an associated expansion tool are arranged on either side of the first lug and the second lug and not between the first lug and the second lug, moving the two engagement portions together allows an engagement portion each to pass through the respective open end of the lug next to it and to enter into the hook cavity of the respective lug next to it. Further moving the two engagement portions together then leads to the lugs being pulled together.

In a preferred embodiment a guide surface partially delimits the hook cavity. In a preferred embodiment, the guide surface is arranged closer to the tooth portion than to the undercut portion. In a preferred embodiment the guide surface is orientated to point upwards from a first end of the guide surface that is arranged closer to the open end of the hook cavity to a second end of the guide surface that is arranged deeper inside the hook cavity. Such a guide surface can help to keep the retainer device on the associated expansion tool, if the engagement portions of the associated expansion tool have been inserted into the hook cavities. The orientation of the guide surface reduces the risk of the engagement portions slipping out of the hook cavity.

In a preferred embodiment the hook cavity has an apex, which is the point arranged the furthest radially outward. In a preferred embodiment, the apex is arranged further radially outwards than that part of the open end of the hook cavity that is arranged the furthest radially outward. The apex hence is part of an upward undercut of the hook cavity compared to the open end of the hook cavity. This measure can also help reduce the risk that the expansion portions of an associated expansion tool slip out of the hook cavities.

In a preferred embodiment, the retainer device only has the first lug and the second lug protruding from the ring body (radially outward or radially inward depending on the embodiment). In alternative embodiments there might be additional lugs or protrusions that protrude from the ring body. In a preferred embodiment, these protrusions are square-shaped. In a preferred embodiment, any protrusion from the ring body is protruding in the same direction of the two directions (1) radially inward and (2) radially outward. In this preferred embodiment, if the first lug and the second lug are protruding radially outward from the ring body, any additional protrusion that there might be in preferred embodiments will also be protruding radially outward. Likewise in this preferred embodiment, if the first lug and the second lug are protruding radially inward from the ring body, any additional protrusion that there might be in preferred embodiments will also be protruding radially inward.

In a preferred embodiment, the ring body has a constant width (the width being the dimension in the direction parallel to the central axis of the ring body). In an alternative embodiment, the width might be designed to reduce toward the radial outer circumference and/or the radial inner circumference of the ring body, for example to create a wedge shaped part of the cross section. A wedge shaped part of the cross section of the ring body can assist the introduction of the ring into the groove on the shaft or the groove in the bore. The invention also relates to a system of a retainer device according to the invention and an associated expansion tool.

The invention also relates to a shaft with a retainer device according to invention placed on the shaft. In a preferred embodiment the shaft has an annular groove and the retainer device is place in the annular groove.

The invention also relates to a device with a bore and a retainer device according to the invention placed in the bore. In a preferred embodiment the bore has a groove and the retainer device is placed in the annular groove.

The invention also relates to a method for expanding a retainer device according to the invention, as defined in claim 15. The method comprises
- inserting two engagement portions of an associated expansion tool from above the outer gap separating the undercut portions of the first and second lugs downwards / radially inwards through the outer gap;
- spreading two engagement portions of the associated expansion tool so that each engagement portion engages with a hook cavity;
- further spreading the two engagement portions to spread the lugs.

In a preferred embodiment, the retainer device with the spreaded lugs is moved onto a shaft by the associated expansion tool. In a preferred embodiment, the retainer device with the spreaded lugs is moved onto a shaft and into alignment with a groove on the shaft by the associated expansion tool. In a preferred embodiment, the spread of the lugs is reduced by way of moving the engagement portions of the associated expansion tool together, placing the retainer device onto the shaft and more preferably placing the retainer device into the groove of the shaft.

The invention also relates to a method for retracting a retainer device according to the invention. The method comprising
- inserting two engagement portions of an associated expansion tool from above the outer gap separating the tooth portions of the first and second lugs downwards /radially inwards through the outer gap and moving the two engagement portions downwards past the first and second lugs;
- spreading two engagement portions of the associated expansion tool;
- retracting the two engagement portions of the associated expansion tool backwards towards the outer gap;
- moving the two engagement portions towards eachother, once the two engagement portions have cleared the undercut portion so that each engagement portion engages with a hook cavity;
- further moving the two engagement portions towards eachother to move the lugs towards eachother.

In a preferred embodiment, the retainer device with the moved together lugs is moved into a bore of a device. In a preferred embodiment, the retainer device with the moved together lugs is moved into a bore of a device and into alignment with a groove in the bore by the associated expansion tool. In a preferred embodiment, the lugs are then spread apart by way of moving the engagement portions of the associated expansion tool way from eachother, placing the retainer device into the bore and more preferably placing the retainer device into the groove in the bore.

These and other objects and advantages will become apparent from the discussion of the distinction between the disclosure and the prior art and when considering the preferred embodiment shown in the accompanying drawings.

### BRIEF DESCRIPTION OF THE DRAWINGS

Reference may now be made to the drawings, which illustrate various embodiments that the disclosure may take in physical form and in certain parts and arrangement of parts wherein:
- FIG. 1: is an illustration according to one non-limiting embodiment of the present disclosure which illustrates an exemplary retainer device having a first and second enhanced lug portion;
- FIG. 2: is an illustration of a bottom elevation view of the retainer device illustrated in FIG. 1;
- FIG. 3: is an illustration of a side elevation view of the retainer device illustrated in FIG. 1;
- FIG. 4: is an illustration of a zoomed-in view of the retainer device illustrated in FIG. 1 showing additional detail of the lug portions;
- FIG. 5, 5a: is close-up picture showing a prior art retaining device which has a large gap between the retaining device and an associated shaft on which the device is installed;
- FIG. 6: 6a is a close-up picture according to the retainer device embodiment illustrated in FIG. 1 and showing a gap between an assembled retaining device and associated shaft which is smaller than the gap of the prior art device pictured in FIG. 5;
- FIG. 7: is an illustration of the retainer device illustrated in FIG. 1 and an engaging portion of an associated expansion tool in a pre-assembly configuration prior to installation with an associated shaft;
- FIG. 8: is an illustration of the retainer device illustrated in FIG. 1 and an engaging portion of an associated expansion tool in an additional pre-assembly configuration prior to installation with an associated shaft;
- FIG. 9: is an illustration of the retainer device illustrated in FIG. 1 and an engaging portion of an associated expansion tool in a further pre-assembly configuration prior to installation with an associated shaft, where the engaging portion of the associated expansion tool has begun to engage the lug portions of the retainer device;
- FIG. 10: is an illustrated of an exemplary associated shaft having an annular groove formed thereon and which is suitable for assembly with the retainer device illustrated in FIG. 1;
- FIG. 11: is an illustration of the retainer device illustrated in FIG. 1 and an engaging portion of an associated expansion tool in a semi-assembled configuration during installation with the associated shaft, where the engaging portion of the associated expansion tool has spread open the lug portions of the retainer device;
- FIG. 12: is an illustration of the retainer device illustrated in FIG. 1 and an engaging portion of an associated expansion tool in a semi-assembled configuration during installation with the associated shaft, where the engaging portion of the associated expansion tool has begun to close to allow the legs of the retainer device to retract into the annular groove of the associated shaft;
- FIG. 13: is an illustration of the retainer device illustrated in FIG. 1 in a fully assembled configuration with the associated shaft;
- Fig. 14: is an illustration according to one further non-inventive embodiment of the present disclosure which illustrates an exemplary retainer device having a first and second enhanced lug portion; and
- Fig. 15: is an illustration according to yet one further non-inventive embodiment of the present disclosure which illustrates an exemplary retainer device having a first and second enhanced lug portion.

### DETAILED DESCRIPTION

A more complete understanding of the articles/devices, processes, and components disclosed herein can be obtained by reference to the accompanying drawings. These figures are merely schematic representations based on convenience and the ease of demonstrating the present disclosure, and are, therefore, not intended to indicate relative size and dimensions of the devices or components thereof and/or to define or limit the scope of the exemplary embodiments.

Although specific terms are used in the following description for the sake of clarity, these terms are intended to refer only to the particular structure of the embodiments selected for illustration in the drawings and are not intended to define or limit the scope of the disclosure. In the drawings and the following description below, it is to be understood that like numeric designations refer to components of like function.

The singular forms "a," "an," and "the" include plural referents unless the context clearly dictates otherwise.

As used in the specification and in the claims, the term "comprising" may include the embodiments "consisting of" and "consisting essentially of." The terms "comprise(s)," "include(s)," "having," "has," "can," "contain(s)," and variants thereof, as used herein, are intended to be open-ended transitional phrases, terms, or words that require the presence of the named ingredients/steps and permit the presence of other ingredients/steps. However, such description should be construed as also describing compositions or processes as "consisting of" and "consisting essentially of" the enumerated ingredients/steps, which allows the presence of only the named ingredients/steps, along with any unavoidable impurities that might result therefrom, and excludes other ingredients/steps.

Numerical values in the specification and claims of this application should be understood to include numerical values which are the same when reduced to the same number of significant figures and numerical values which differ from the stated value by less than the experimental error of conventional measurement technique of the type described in the present application to determine the value.

All ranges disclosed herein are inclusive of the recited endpoint and independently combinable (for example, the range of "from 2 grams to 10 grams" is inclusive of the endpoints, 2 grams and 10 grams, and all the intermediate values).

The terms "about" and "approximately" can be used to include any numerical value that can vary without changing the basic function of that value. When used with a range, "about" and "approximately" also disclose the range defined by the absolute values of the two endpoints, e.g. "about 2 to about 4" also discloses the range "from 2 to 4." Generally, the terms "about" and "approximately" may refer to plus or minus 10% of the indicated number.

While this invention is susceptible of embodiments in many different forms, there is shown in the drawings and described herein in detail specific embodiments with the understanding that the present disclosure is to be considered as an exemplification and is not intended to be limited to the embodiments illustrated.

It will be understood that like or analogous elements and/or components, referred to herein, may be identified throughout the drawings by like reference characters. In addition, it will be understood that the drawings are merely schematic representations of the invention, and some of the components may have been distorted from actual scale for purposes of pictorial clarity.

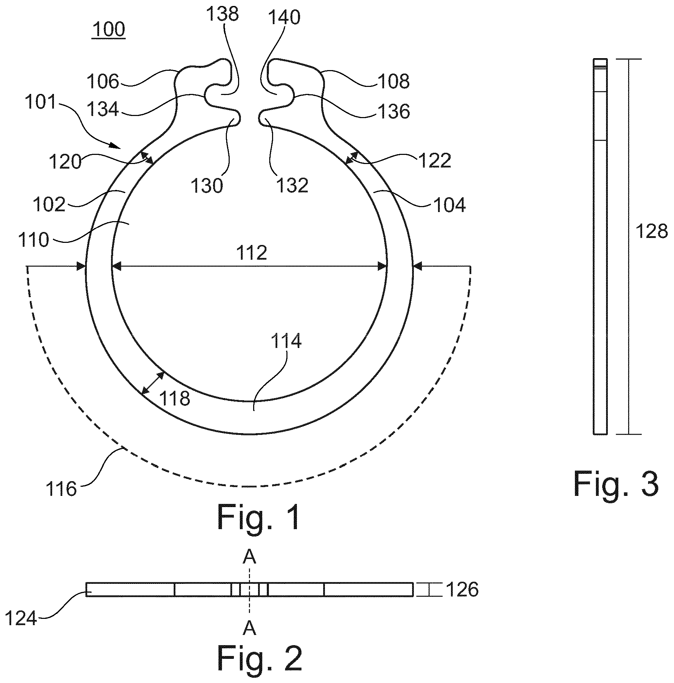

Various embodiments of the presently disclosed subject matter described herein will be better understood when read in conjunction with the appended drawings of FIGS. 1-15. The showings of FIGS. 1-13 are for the purpose of illustrating non-limiting embodiments of the disclosure only and not for the purpose of limiting the same.

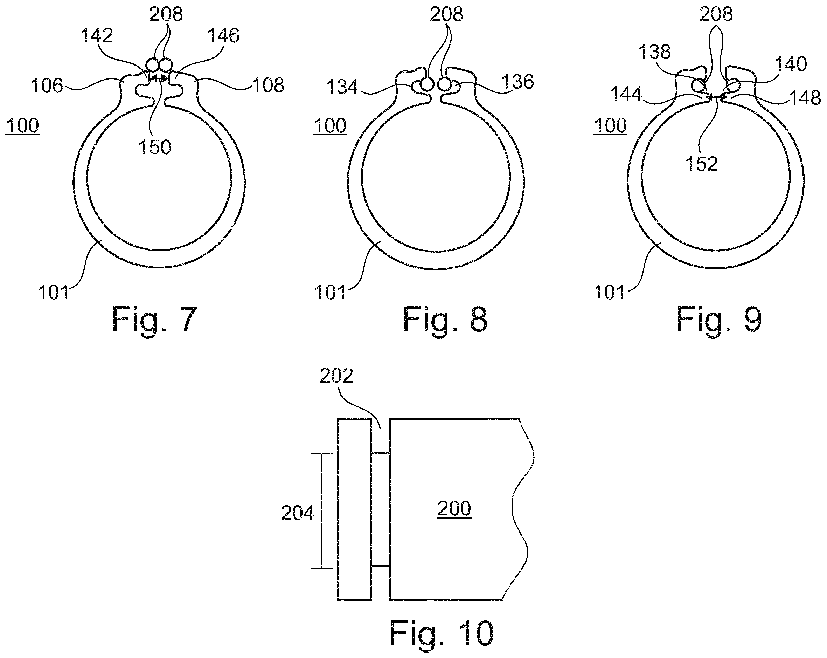

An embodiment of a retainer device 100 is shown in FIGS. 1-9 and 11-15, and an exemplary, non-limiting shaft component is shown in FIG. 10 which is suitable for installation with the retainer device 100. The retainer device 100 includes a flat, metal body 101 having a flat side profile 124, shown in FIG. 2. The ring body 101 has a thickness 126, also shown in FIG. 2, and a length 128, shown in FIG. 3.

In FIG. 1, the ring body 101 includes a pair of arcuate legs 102, 104. Disposed at one end of the first arcuate leg 102 is a respective lug portion 106. Similarly, a respective lug portion 108 is also disposed at one end of the second arcuate leg 104. Additional features of the lug portions 106, 108 are described in greater detail below.

The pair of arcuate legs 102, 104 define an aperture 110 of the ring body 101. A diameter 112 of the aperture 110 is at least equal to the diameter 204 of the annular groove 202 on the associated shaft 200, such that the ring body 101 can fit around the annular groove 202 of the shaft 200. An exemplary, non-limiting shaft 200 and annular groove 202 on which the retainer device 100 can be installed is illustrated in FIG. 10.

The other end of legs 102, 104 are joined by an arcuate bridge portion 114 that defines a radially expandable area 116 shown in FIG. 1 as having a variable radial cross-section 118. The radially expandable area 116 comprises 180 degrees of the arcuate bridge portion 114. A decreased radial cross-section 120 is disposed between one end of the leg 102 and the arcuate bridge portion 114 and a decreased radial cross-section 122 is disposed between one end of the leg 122 and the arcuate bridge portion 114. The decreased radial cross-sections 120, 122 are generally smaller than the radial cross-section 118 of the radially expandable area 116.

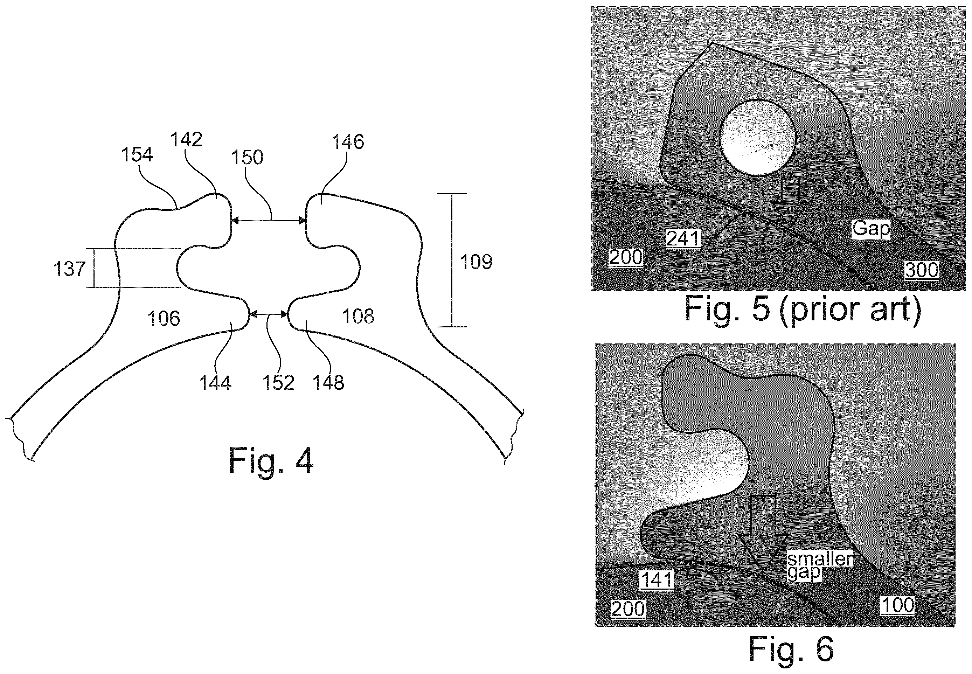

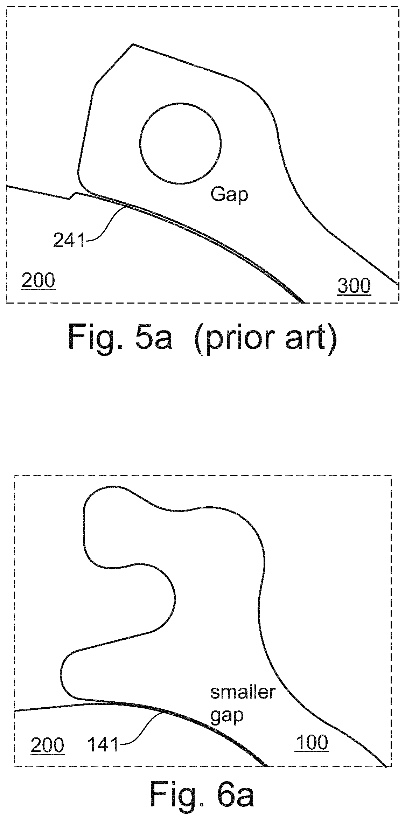

Lug portions 106, 108 of legs 102, 104 each have a length 109 as shown in FIG. 4. In addition, lug portions 106, 108 each include a backed-off end portion 130 and 132, respectively, adapted to form a gap 141 between the lug portions 106, 108 of the ring body 101 and the associated shaft 200, shown in FIG. 6, 6a, that is smaller than the gap 241 between the prior art ring 300 and the associated shaft 200, shown in FIG. 5, 5a. The gap 141 formed by backed-off end portions 130, 132 advantageously helps to prevent damage (e.g., chipping) of the associated shaft 200 and annular groove 202 during assembly with the retainer device 100. In addition, backed-off end portions 130, 132 also advantageously provide a substantially flush seat between the lugs 106, 108 and the associated shaft 200/groove 202, which helps improve overall balance resulting in lower forces during operation of the associated shaft.

Lugs 106, 108 further include a pair of opposed arcuate hook cavities 134, 136, respectively, adapted to guide and secure an engagement portion of an associated expansion tool (not shown), such as plier tips 208, during installation and removal of the retainer device 100. The hook cavities 134, 136 extend inwardly into the lugs 106, 108 in a direction generally perpendicular to the central axis AA. The hook cavity 134 includes an open end 138 opposite an open end 140 of the hook cavity 136. The lug 106 includes an undercut portion 142 and a tooth portion 144 that together define the open end 138 of the lug 106. Generally, the undercut portion 142 is disposed above the tooth portion 144 on the lug 106. The lug 108 similarly includes an opposing undercut portion 146 and tooth portion 148 that together define the open end 140 of the lug 108. Generally, the undercut portion 146 is disposed above the tooth portion 148 on the lug 108.

The respective hook cavities 134, 136 are generally disposed between the undercut portions 142, 146 and tooth portions 144, 148 of the lugs 106, 108. The teeth 144, 148 of the lugs 106, 108 generally provide an inner surface (i.e., the surface facing the associated shaft 200 when assembled with the retainer device 100) on which the backed-off end portions 130, 132 are formed to provide the gap 141 described above.

The undercut portions 142, 146 of lugs 106, 108, respectively, are adapted to prevent the tips 208 of the associated expansion tool from slipping out of the arcuate hook cavities 134, 136 when the tips 208 are spread open during assembly of the retainer device 100 with the associated shaft 200. A diameter 137 of the hook cavities 134, 136 is at least the diameter of the tips 208 of the associated expansion tool, such that the tips 208 can fit within and engage the hook cavities 134, 136. In the illustrated embodiment, the hook cavities 134, 136 are generally U-shaped, however, the hook cavities 134, 136 may comprise any shape.

The hook cavities 134, 136 defined by the undercut portions 142, 146 and the tooth portions 144, 148 are advantageously adapted to permit the tips 208 of the associated expansion tool to be applied/fed axially or radially during and after assembly with the associated shaft 200. In other words, the design of lug portions 106, 108 is such that the associated expansion tool can engage the hook cavities 134, 136 at the open ends 138, 140 in at least two orientations with respect to the associated shaft 200.

First, the associated expansion tool can engage the hook cavities 134, 136 with tips 208 when the expansion tool is oriented parallel to the central axis AA of the assembled retainer device 100 / associated shaft 200 (i.e., the associated expansion tool is applied axially with respect to the associated shaft 200), as is common practice in the art.

Second, the associated expansion tool can also engage the hook cavities 134, 136 with tips 208 when the expansion tool is oriented perpendicular to the to the central axis AA of the assembled retainer device 100 / associated shaft 200 (i.e., the associated expansion tool is applied radially with respect to the associated shaft 200).

An outer gap 150 between the undercut portions 142, 146 of lugs 106, 108, respectively, provides an opening that is larger than the opening provided by the inner gap 152 which separates the tooth portions 144, 148 of lugs 106, 108, respectively. As used herein, the term "outer" means that gap 150 is disposed farther radially outward and away from the associated shaft 200 compared to the "inner" gap 152, which is disposed closer to the associated shaft 200 than the outer gap 150.

The large outer gap 150 between undercut portions 142, 146 is adapted to give access to the tips 208 of the associated expansion tool during assembly of the retainer device 100 with the associated shaft 200, including when the tool is oriented horizontally with respect to the associated shaft 200. The large outer gap 150 is further adapted to permit easy removal of the tips 208 of the associated expansion tool after assembly of the retainer device 100 with the associated shaft 200. The smaller inner gap 152 between tooth portions 144, 148 is adapted to prevent the tips 208 of the associated expansion tool from being pushed too far downward and into aperture 110 during assembly of the retainer device 100 with the associated shaft 200.

In addition, at least one of the lug portions 106, 108 of the ring body 101 includes an optional indent 154 formed on an outer surface the lug portion. As illustrated in FIG. 3, the indent 154 is disposed on the first lug 106 and is generally located adjacent the undercut portion 142. However, the specific location of the indent 154 is non-limiting, such that the indent 154 could alternatively be disposed on the second lug 108 without departing from the scope of the present disclosure.

The indent 154 is generally formed by removing a portion of material from an outer surface of the first lug 106. The indent 154 is adapted to serve as an indicator of punching direction. That is, the indent 154 assists in determining the proper left-hand to right-hand orientation of the ring body 101 and provides control of the stamping edge of the ring body 101 during manufacture, thereby helping improve the lead in time for final assembly of the retainer device 100 with the associated shaft 200 and any other associated components.

In embodiments which incorporate the optional indent 154, the indent 154 has the effect of moving the center of gravity away from the center axis of the assembled shaft 200/retainer device 100 in a direction generally opposite from the optional indent 154. As illustrated in FIGS. 1 and 2, since the indent 154 is disposed on the first, left-side lug potion 106, the assembled shaft 200 / retainer device 100 will have a center of gravity which is shifted rightward and away from the central axis AA shown in FIG. 2. To compensate for the center of gravity shift caused by the optional indent 154, material can be removed from another portion of the ring (not shown) such that the center of gravity shifts back toward central axis AA. Moreover, while the shape of the indent 154 is non-limiting, it should be understood that the indent is generally formed with a shape which ensures balance with the opposite second lug 108 at high speeds.

The design of the lugs 106, 108 on the ring body 101 of the exemplary retainer device 100, including the backed-off ends 130/132, hook cavities 134 / 136, undercut portions 142/146, tooth portions 144/148, outer gap 150, and inner gap 152, advantageously permit the tips 208 of the associated expansion tool to be applied / fed axially or radially during and after assembly with the associated shaft 200. That is, by permitting both axial and radial access for the associated expansion tool, flexibility is added during assembly and disassembly, including automated processes thereof. Moreover, the enhanced lug portions 106, 108 of the exemplary embodiments described above provide for a ring body 101 which is substantially balanced in the assembled state with an associated shaft. In other words, the enhanced lug portions 106, 108 help to achieve a center of gravity which is located substantially in the center of the associated shaft 200 when assembled with the exemplary retainer device 100 of the present disclosure.

Referring now to FIGS. 7 - 9 and 11 - 13, an exemplary, non-limiting assembly process of the retainer device 100 is illustrated. FIG. 10 illustrates an exemplary, non-limiting associated shaft 200 and annular groove 202 which receives the retainer device 100 when in an assembled configuration. In the illustrated process, the tips 208 of the associated expansion tool are being applied radially with respect to the associated shaft 200. However, it should be understood that the tips 208 could also be applied axially with respect to the associated shaft 200 without departing from the scope of the present disclosure.

In FIG. 7, the ring body 101 of the retainer device and the tips 208 of the associated expansion tool are in a pre-assembly configuration. In the pre-assembly configuration, the associated expansion tool is oriented radially with respect to associated shaft 200 and the tips 208 of the associated expansion tool are placed above the outer gap 150 which separates the undercut portions 142, 146 of the lugs 106, 108.

In FIG. 8, the ring body 101 of the retainer device and the tips 208 of the associated expansion tool are still in the pre-assembly configuration, but the tips 208 of the associated expansion tool are moved into the outer gap 150 so that the pair of opposed arcuate hook cavities 134, 136 can guide and secure the tips 208 of the associate expansion tool for assembly of the retainer ring 100 with the associated shaft 200.

In FIG. 9, the ring body 101 of the retainer device and the tips 208 of the associated expansion tool are still in the pre-assembly configuration, but the tips 208 of the associated expansion tool have been moved into the outer gap 150 with additional downward movement of the tips 208 being prevented by the size of the inner gap 152 which separates the tooth portions 144, 148 of the lugs 106, 108. In addition, the tips 208 of the associated expansion tool are spread open into open ends 138, 140 such that the tips 208 enter the hook cavities 134, 136 and engage the undercut portions 142, 146 of lugs 106, 108. As mentioned above, the undercut portions 142, 146 of lugs 106, 108, are adapted to prevent the tips 208 of the associated expansion tool from slipping out of the arcuate hook cavities 134, 136 when the tips 208 are spread open during assembly of the retainer device 100 with the associated shaft 200.

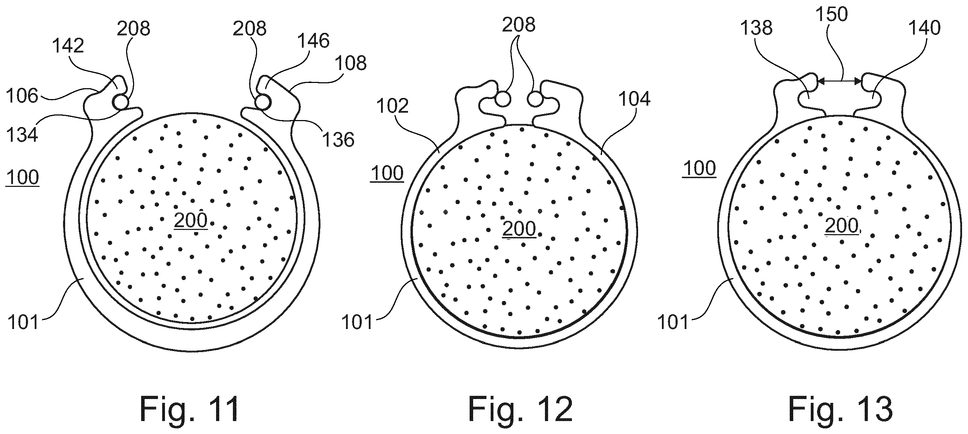

In FIG. 11, the ring body 101 of the retainer device, the associated shaft 200, and the tips 208 of the associated expansion tool are in a semi-assembled configuration. In the semi-assembled configuration, the tips 208 of the associated expansion tool have been spread open a sufficient amount to permit the placement of the ring body 101 around the associated shaft 200. The undercut portions 142, 146 of lugs 106, 108, maintain a secure engagement with tips 208 of the associated expansion tool such that the tips 208 do not accidentally slip out from the arcuate hook cavities 134, 136 during the spreading open of tips 208.

In FIG. 12, the ring body 101 of the retainer device, the associated shaft 200, and the tips 208 of the associated expansion tool are still in a semi-assembled configuration, but the tips 208 of the associated expansion tool have begun to close to permit the pair of arcuate legs 102, 104 to retract inward into placement in the annular groove 202 of the associated shaft 200. The undercut portions 142, 146 of lugs 106, 108, maintain a secure engagement with tips 208 of the associated expansion tool such that the tips 208 do not accidentally slip out from the arcuate hook cavities 134, 136 during the closing of tips 208.

In FIG. 13, the ring body 101 of the retainer device and the associated shaft 200 are illustrated in a fully assembled configuration. In the fully assembled configuration, the tips 208 of the associated expansion tool are disengaged from undercut portions 142, 146, removed out of open ends 138, 140, and retracted upward out and away from the outer gap 150 such that the pair of arcuate legs 102, 104 can retract fully inward into secure placement within the annular groove 202 of the associated shaft 200. As mentioned above, the aperture 110 of the ring body 101 defined by the pair of arcuate legs 102, 104 is at least equal to the diameter 204 of the annular groove 202 on the associated shaft 200, such that the ring body 101 fits around the annular groove 202 of the shaft 200.

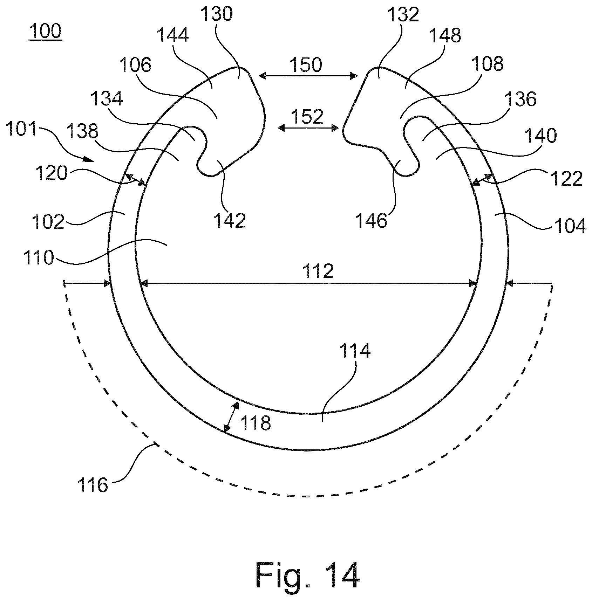

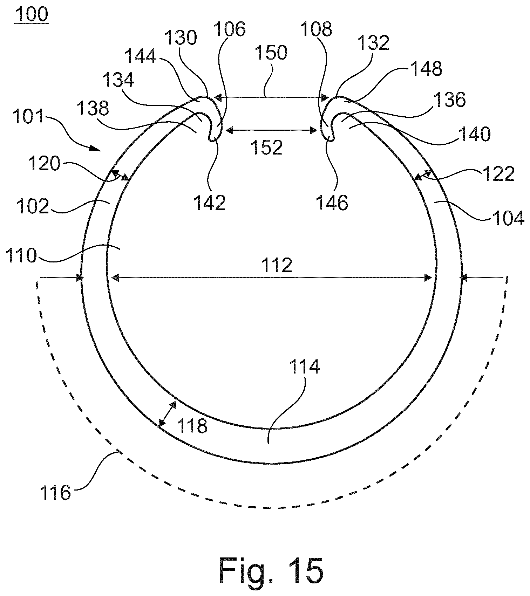

While the embodiments shown in Fig. 1 to 9 and 11 to 13 are embodiments that have the first lug 106 and the second lug 108 pointing radially outwards, the two embodiments shown in Fig. 14 and 15 are embodiments that have the first lug 106 and the second lug 108 pointing radially inwards. The embodiments shown in Fig. 1 to 9 and 11 to 13 will predominantly be used to be place around a shaft, for example into a groove 202 of a shaft 200. The non-inventive embodiments of Fig. 14 and 15 will predominantly be used to be placed into a bore of a device, for example into a groove in a bore of a device. In the embodiments shown in Fig. 14 and 15 the engagement of the the tips of an associated expansion tool with the cavities 134, 136 can easily be achieve by inserting the tips somewhere in the middle of the ring body 101 and to have the tips expand radially outward. By this movement, the tips will come into contact with the inward facing wall of the ring body 101 and can slide along the inward facing wall of the ring body 101 into engagement with the cavities 134,136.

While the retainer device 100 of the present disclosure is not limited to any specific dimensions, in some particular embodiments the retainer device 100 is designed according to the standards set forth in DIN 471. In this regard, the dimensions for the length of the lugs 109, the aperture diameter 112, the ring body thickness 126, the ring body length 128, the hook cavity diameter 137, etc., can be chosen to meet standards in accordance with DIN 471.

In some particular embodiments, the retainer device 100 of the present disclosure is shaped to have a contour similar to existing retaining devices formed according to the A3 designation standards set forth in DIN 471. However, such a configuration is non-limiting. Existing retaining devices made according to the A3 designation set forth in DIN 471 are rated for assembly with an associated shaft having a diameter of from 6 - 40 mm. However, the exemplary retaining devices 100 described herein, having the enhanced design of lugs 106, 108 in accordance with the present disclosure, can support assembly with an associated shaft having a diameter of up to 60 mm. However, such a configuration is non-limiting.

Moreover, the retainer device 100 of the present disclosure is not limited to the use of any specific material or manufacturing method for forming the ring body 101. However, the ring body 101 of the retainer device 100 is generally made by cutting or stamping from a sheet of resilient material, such as a suitably resilient sheet metal. However, such a configuration is non-limiting.

In addition, the retainer device 100 made in accordance with the present disclosure is not limited to use in any particular machine assembly. However, the retainer device 100 is generally used as part of a system including associated shafts having machine components disposed thereon where it is desired to retain the machine components on the associated shaft. The retainer device 100 achieves this by transferring large axial forces from the machine component into the annular groove of the associated shaft in which the retainer device 100 is installed. As a result, the retainer device 100 of the present disclosure is particularly suited for applications in mechanical engineering, automotive engineering, gear systems, electrical engineering, precision mechanics, apparatus engineering, etc., and the like.

While considerable emphasis has been placed herein on the structures and configurations of the preferred embodiments of the invention, it will be appreciated that other embodiments, as well as modifications of the embodiments disclosed herein, can be made without departing from the principles of the invention, as defined in the appended claims.

## Claims

1. A retainer device (100) for assembly with an associated shaft (200) by an associated expansion tool, comprising:
• a ring body (101) having a first arcuate leg (102), a second arcuate leg (104), and an arcuate bridge (114) portion joining the first and second arcuate legs (102,104);
• a first lug (106) disposed at one end of the first arcuate leg (102) and a second lug (108) disposed at one end of the second arcuate leg (104), the first and second arcuate legs (102,104) each comprising:
∘ a tooth portion (144,148) having a backed-off end (130,132) adapted to form a gap (141) with the associated shaft (200);
∘ an undercut portion (142, 146) disposed distanced from the tooth portion (144,148); and,
∘ a hook cavity (134,136) with an open end (138,140) defined by the tooth portion (144,148) and the undercut portion (142,146), the hook cavity (134,136) being disposed between the undercut portion (142,146) and the tooth portion (144,148);
wherein the hook cavities (134,136) of the first and second lugs (106, 108) are adapted to receive the associated expansion tool when the associated expansion tool is oriented both axially and radially with respect to the associated shaft
**characterized in that**
the first and second lugs (106, 108) achieve a center of gravity of the ring body (101) which is located substantially in the center of the associated shaft (200) when assembled with the retainer device (100).

2. The retainer device of claim 1, wherein the undercut portion (142, 146) is disposed above from the tooth portion (144,148) or the undercut portion (142, 146) is disposed radially inward from the tooth portion (144,148).

3. The retainer device of claim 1 or 2, wherein the
• undercut portion (142, 146) is disposed above from the tooth portion (144,148) and the undercut portions (142,146) of the first and second lugs (106,108) are disposed opposite one another and are separated by an outer gap (150)
or
• the undercut portion (142, 146) is disposed radially inward from the tooth portion (144,148) and the undercut portions (142,146) of the first and second lugs (106,108) are disposed opposite one another and are separated by an inner gap (152).

4. The retainer device of claim 3, wherein the outer gap (150) between the undercut portions (142,146) is adapted to permit the associated expansion tool to engage the hook cavities (134,136) of the first and second lugs.

5. The retainer device of any one of claims 3 or 4, wherein
• the tooth portions (144,148) of the first and second lugs (106,108) are disposed opposite one another and are separated by an inner gap (152) which is smaller than the outer gap (150) separating the undercut portions (142,146) of the first and second lugs (106,108)
or
• the tooth portions (144,148) of the first and second lugs (106,108) are disposed opposite one another and are separated by an outer gap (150) which is larger than the inner gap (152) separating the undercut portions (142,146) of the first and second lugs (106,108).

6. The retainer device of claim 5, wherein the inner gap (152) between the tooth portions (144,148) is adapted to restrict downward movement of the associated expansion tool.

7. The retainer device of any one of claims 1-6, further comprising an indent (154) formed on an outer surface of one of the first or second lugs (106,108).

8. The retainer device of claim 6, wherein the indent (154) is adapted to indicate a proper orientation of the retainer device (100).

9. The retainer device of any one of claims 1-8, wherein the hook cavities (134,136) of the first and second lugs (106, 108) have a diameter corresponding to a diameter of an engagement portion of the associated expansion tool.

10. The retainer device of claim 8, wherein the associated expansion tool is a pair of pliers and the engagement portion is a pair of plier tips.

11. The retainer device of claim 8 or 9, wherein the diameter of the hook cavities (134,136) of the first and second lugs is at least equal to the diameter of the plier tips (208).

12. System of a retainer device (100) according to any one of claims 1 to 11 and an associated expansion tool.

13. Shaft (200) with a retainer device (100) according to any one of claims 1 to 11 placed on the shaft.

14. Device with a bore and a retainer device (100) according to any one of claims 1 to 11 placed in the bore.

15. Method for expanding a retainer device (100) according to any one of claims 1 to 11, comprising
∘ inserting two engagement portions of an associated expansion tool from above the outer gap (150) separating the undercut portions (142,146) of the first and second lugs (106,108) downwards through the outer gap (150);
∘ spreading two engagement portions of the associated expansion tool so that each engagement portion engages with a hook cavity (134, 136);
∘ further spreading the two engagement portions to spread the lugs (106, 108).

16. Method for retracting a retainer device (100) according to any one of claims 1 to 11, comprising
• inserting two engagement portions of an associated expansion tool from above the outer gap (150) separating the tooth portions (144,148) of the first and second lugs (106,108) downwards through the outer gap (150) and moving the two engagement portions downwards past the first and second lugs (106,108);
• spreading two engagement portions of the associated expansion tool;
• retracting the two engagement portions of the associated expansion tool backwards towards the outer gap (150);
• moving the two engagement portions towards eachother, once the two engagement portions have cleared the undercut portion (142, 146) so that each engagement portion engages with a hook cavity (134, 136);
• further moving the two engagement portions towards eachother to move the lugs (106, 108) towards eachother.

## Patentansprüche

1. Eine Haltevorrichtung (100) zum Zusammenbau mit einer zugehörigen Welle (200) mittels eines zugehörigen Expansionswerkzeugs, umfassend:
• einen Ringkörper (101) mit einem ersten bogenförmigen Schenkel (102), einem zweiten bogenförmigen Schenkel (104) und einem bogenförmigen Brückenabschnitt (114), der den ersten und den zweiten bogenförmigen Schenkel (102, 104) verbindet;
• eine erste Lasche (106), die an einem Ende des ersten bogenförmigen Schenkels (102) angeordnet ist, und eine zweite Lasche (108), die an einem Ende des zweiten bogenförmigen Schenkels (104) angeordnet ist, wobei der erste und der zweite bogenförmige Schenkel (102, 104) jeweils umfassen:
• einen Zahnabschnitt (144, 148) mit einem zurückgesetzten Ende (130, 132), das dazu ausgelegt ist, einen Spalt (141) mit der zugehörigen Welle (200) zu bilden;
• einen hinterschnittenen Abschnitt (142, 146), der in einem Abstand vom Zahnabschnitt (144, 148) angeordnet ist; und
• einen Hakenhohlraum (134, 136) mit einem offenen Ende (138, 140), das durch den Zahnabschnitt (144, 148) und den hinterschnittenen Abschnitt (142, 146) definiert ist, wobei der Hakenhohlraum (134, 136) zwischen dem hinterschnittenen Abschnitt (142, 146) und dem Zahnabschnitt (144, 148) angeordnet ist;
wobei die Hakenhohlräume (134, 136) der ersten und zweiten Lasche (106, 108) dazu ausgelegt sind, das zugehörige Expansionswerkzeug aufzunehmen, wenn das zugehörige Expansionswerkzeug sowohl axial als auch radial in Bezug auf die zugehörige Welle ausgerichtet ist,
**dadurch gekennzeichnet, dass**
die erste und zweite Lasche (106, 108) einen Schwerpunkt des Ringkörpers (101) erzeugen, der sich im Wesentlichen in der Mitte der zugehörigen Welle (200) befindet, wenn diese mit der Haltevorrichtung (100) zusammengebaut ist.

2. Die Haltevorrichtung nach Anspruch 1, wobei der hinterschnittene Abschnitt (142, 146) oberhalb des Zahnabschnitts (144, 148) angeordnet ist oder der hinterschnittene Abschnitt (142, 146) radial innerhalb des Zahnabschnitts (144, 148) angeordnet ist.

3. Die Haltevorrichtung nach Anspruch 1 oder 2, wobei der
• hinterschnittene Abschnitt (142, 146) oberhalb des Zahnabschnitts (144, 148) angeordnet ist und die hinterschnittenen Abschnitte (142, 146) der ersten und zweiten Lasche (106, 108) einander gegenüberliegend angeordnet und durch einen äußeren Spalt (150) getrennt sind
oder
• der hinterschnittene Abschnitt (142, 146) radial innerhalb des Zahnabschnitts (144, 148) angeordnet ist und die hinterschnittenen Abschnitte (142, 146) der ersten und zweiten Lasche (106, 108) einander gegenüberliegend angeordnet und durch einen inneren Spalt (152) getrennt sind.

4. Die Haltevorrichtung nach Anspruch 3, wobei der äußere Spalt (150) zwischen den hinterschnittenen Abschnitten (142, 146) so ausgelegt ist, dass das zugehörige Expansionswerkzeug in die Hakenhohlräume (134, 136) der ersten und zweiten Lasche eingreifen kann.

5. Die Haltevorrichtung nach einem der Ansprüche 3 oder 4, wobei
• die Zahnabschnitte (144, 148) der ersten und zweiten Lasche (106, 108) einander gegenüberliegend angeordnet sind und durch einen inneren Spalt (152) voneinander getrennt sind, der kleiner ist als der äußere Spalt (150), der die hinterschnittenen Abschnitte (142, 146) der ersten und zweiten Lasche (106, 108) voneinander trennt
oder
• die Zahnabschnitte (144, 148) der ersten und zweiten Lasche (106, 108) einander gegenüberliegend angeordnet sind und durch einen äußeren Spalt (150) voneinander getrennt sind, der größer ist als der innere Spalt (152), der die hinterschnittenen Abschnitte (142, 146) der ersten und zweiten Lasche (106, 108) voneinander trennt.

6. Die Haltevorrichtung nach Anspruch 5, wobei der innere Spalt (152) zwischen den Zahnabschnitten (144, 148) so ausgelegt ist, dass er die Abwärtsbewegung des zugehörigen Expansionswerkzeugs begrenzt.

7. Die Haltevorrichtung nach einem der Ansprüche 1 bis 6, die ferner eine Vertiefung (154) umfasst, die an einer Außenfläche einer der ersten oder zweiten Lasche (106, 108) ausgebildet ist.

8. Die Haltevorrichtung nach Anspruch 6, wobei die Vertiefung (154) dazu dient, die richtige Ausrichtung der Haltevorrichtung (100) anzuzeigen.

9. Die Haltevorrichtung nach einem der Ansprüche 1 bis 8, wobei die Hakenhohlräume (134, 136) der ersten und zweiten Laschen (106, 108) einen Durchmesser aufweisen, der einem Durchmesser eines Eingriffsabschnitts des zugehörigen Expansionswerkzeugs entspricht.

10. Die Haltevorrichtung nach Anspruch 8, wobei das zugehörige Expansionswerkzeug eine Zange ist und der Eingriffsabschnitt ein Paar Zangenspitzen ist.

11. Die Haltevorrichtung nach Anspruch 8 oder 9, wobei der Durchmesser der Hakenhohlräume (134, 136) der ersten und zweiten Lasche mindestens dem Durchmesser der Zangenspitzen (208) entspricht.

12. System aus einer Haltevorrichtung (100) gemäß einem der Ansprüche 1 bis 11 und einem zugehörigen Expansionswerkzeug.

13. Welle (200) mit einer Haltevorrichtung (100) gemäß einem der Ansprüche 1 bis 11, die auf der Welle angebracht ist.

14. Vorrichtung mit einer Bohrung und einer Haltevorrichtung (100) gemäß einem der Ansprüche 1 bis 11, die in der Bohrung angebracht ist.

15. Verfahren zum Expandieren einer Haltevorrichtung (100) gemäß einem der Ansprüche 1 bis 11, umfassend
• Einführen von zwei Eingriffsabschnitten eines zugehörigen Expansionswerkzeugs von oberhalb des äußeren Spalts (150), der die hinterschnittenen Abschnitte (142, 146) der ersten und zweiten Lasche (106, 108) trennt, nach unten durch den äußeren Spalt (150);
• Auseinanderziehen der beiden Eingriffsabschnitte des zugehörigen Expansionswerkzeugs, so dass jeder Eingriffsabschnitt in einen Hakenhohlraum (134, 136) eingreift;
• weiteres Auseinanderziehen der beiden Eingriffsabschnitte, um die Laschen (106, 108) auseinanderzuziehen.

16. Verfahren zum Zurückziehen einer Haltevorrichtung (100) gemäß einem der Ansprüche 1 bis 11, umfassend
• Einführen zweier Eingriffsabschnitte eines zugehörigen Expansionswerkzeugs von oberhalb des äußeren Spalts (150), der die Zahnabschnitte (144, 148) der ersten und zweiten Lasche (106, 108) trennt, nach unten durch den äußeren Spalt (150) und Bewegen der beiden Eingriffsabschnitte nach unten vorbei an der ersten und zweiten Lasche (106, 108);
• Ausbreiten der beiden Eingriffsabschnitte des zugehörigen Expansionswerkzeugs;
• Zurückziehen der beiden Eingriffsabschnitte des zugehörigen Expansionswerkzeugs in Richtung des äußeren Spalts (150);
• Bewegen der beiden Eingriffsabschnitte aufeinander zu, sobald die beiden Eingriffsabschnitte den hinterschnittenen Abschnitt (142, 146) passiert haben, so dass jeder Eingriffsabschnitt in einen Hakenhohlraum (134, 136) eingreift;
• Weiteres Bewegen der beiden Eingriffsabschnitte aufeinander zu, um die Laschen (106, 108) aufeinander zu zu bewegen.

## Revendications

1. Dispositif de retenue (100) pour assemblage avec un arbre associé (200) par un outil d'expansion associé, comprenant :
• un corps annulaire (101) comportant une première branche arquée (102), une seconde branche arquée (104) et une partie de pont arquée (114) reliant les première et seconde branches arquées (102, 104) ;
• un premier tenon (106) disposé à une extrémité de la première branche arquée (102) et un second tenon (108) disposé à une extrémité de la seconde branche arquée (104), les première et seconde branches arquées (102, 104) comprenant chacune :
∘ une partie de dent (144, 148) comportant une extrémité reculée (130, 132) adaptée pour former un espace (141) avec l'arbre associé (200) ;
∘ une partie en contre-dépouille (142, 146) disposée à distance de la partie de dent (144, 148) ; et,
∘ une cavité de crochet (134, 136) avec une extrémité ouverte (138, 140) définie par la partie de dent (144, 148) et la partie en contre-dépouille (142, 146), la cavité de crochet (134, 136) étant disposée entre la partie en contre-dépouille (142, 146) et la partie de dent (144, 148) ;
dans lequel les cavités de crochet (134, 136) des premier et second tenons (106, 108) sont adaptées pour recevoir l'outil d'expansion associé lorsque l'outil d'expansion associé est orienté à la fois axialement et radialement par rapport à l'arbre associé, **caractérisé en ce que**
les premier et second tenons (106, 108) réalisent un centre de gravité du corps annulaire (101) qui est situé sensiblement au centre de l'arbre associé (200) lors de l'assemblage avec le dispositif de retenue (100).

2. Dispositif de retenue de la revendication 1, dans lequel la partie en contre-dépouille (142, 146) est disposée au-dessus de la partie de dent (144, 148) ou la partie en contre-dépouille (142, 146) est disposée radialement vers l'intérieur depuis la partie de dent (144, 148).

3. Dispositif de retenue de la revendication 1 ou 2, dans lequel
• la partie en contre-dépouille (142, 146) est disposée au-dessus de la partie de dent (144, 148) et les parties en contre-dépouille (142, 146) des premier et second tenons (106, 108) sont disposées en face l'une de l'autre et sont séparées par un espace extérieur (150)
ou
• la partie en contre-dépouille (142, 146) est disposée radialement vers l'intérieur depuis la partie de dent (144, 148) et les parties en contre-dépouille (142, 146) des premier et second tenons (106, 108) sont disposées en face l'une de l'autre et sont séparées par un espace intérieur (152).

4. Dispositif de retenue de la revendication 3, dans lequel l'espace extérieur (150) entre les parties en contre-dépouille (142, 146) est adapté pour permettre à l'outil d'expansion associé de venir en prise avec les cavités de crochet (134, 136) des premier et second tenons.

5. Dispositif de retenue de l'une quelconque des revendications 3 ou 4, dans lequel
• les parties de dent (144, 148) des premier et second tenons (106, 108) sont disposées en face l'une de l'autre et sont séparées par un espace intérieur (152) qui est plus petit que l'espace extérieur (150) séparant les parties en contre-dépouille (142, 146) des premier et second tenons (106, 108)
ou
• les parties de dent (144, 148) des premier et second tenons (106, 108) sont disposées en face l'une de l'autre et sont séparées par un espace extérieur (150) qui est plus grand que l'espace intérieur (152) séparant les parties en contre-dépouille (142, 146) des premier et second tenons (106, 108).

6. Dispositif de retenue de la revendication 5, dans lequel l'espace intérieur (152) entre les parties de dent (144, 148) est adapté pour restreindre un mouvement vers le bas de l'outil d'expansion associé.

7. Dispositif de retenue de l'une quelconque des revendications 1 à 6, comprenant en outre un renfoncement (154) formé sur une surface extérieure de l'un des premier ou second tenons (106, 108).

8. Dispositif de retenue de la revendication 6, dans lequel le renfoncement (154) est adapté pour indiquer une orientation correcte du dispositif de retenue (100).

9. Dispositif de retenue de l'une quelconque des revendications 1 à 8, dans lequel les cavités de crochet (134, 136) des premier et second tenons (106, 108) comportent un diamètre correspondant à un diamètre d'une partie de prise de l'outil d'expansion associé.

10. Dispositif de retenue de la revendication 8, dans lequel l'outil d'expansion associé est une paire de pinces et la partie de prise est une paire de pointes de pinces.

11. Dispositif de retenue de la revendication 8 ou 9, dans lequel le diamètre des cavités de crochet (134, 136) des premier et second tenons est au moins égal au diamètre des pointes de pince (208).

12. Système d'un dispositif de retenue (100) selon l'une quelconque des revendications 1 à 11 et d'un outil d'expansion associé.

13. Arbre (200) avec un dispositif de retenue (100) selon l'une quelconque des revendications 1 à 11 placé sur l'arbre.

14. Dispositif avec un alésage et un dispositif de retenue (100) selon l'une quelconque des revendications 1 à 11 placé dans l'alésage.

15. Procédé permettant l'expansion d'un dispositif de retenue (100) selon l'une quelconque des revendications 1 à 11, comprenant
∘ l'insertion de deux parties de prise d'un outil d'expansion associé depuis le dessus de l'espace extérieur (150) séparant les parties en contre-dépouille (142, 146) des premier et second tenons (106, 108) vers le bas à travers l'espace extérieur (150) ;
∘ l'écartement de deux parties de prise de l'outil d'expansion associé de sorte que chaque partie de prise vienne en prise avec une cavité de crochet (134, 136) ;
∘ l'écartement supplémentaire des deux parties de prise pour écarter les tenons (106, 108).

16. Procédé permettant l'escamotage d'un dispositif de retenue (100) selon l'une quelconque des revendications 1 à 11, comprenant
• l'insertion de deux parties de prise d'un outil d'expansion associé depuis le dessus de l'espace extérieur (150) séparant les parties de dent (144, 148) des premier et second tenons (106, 108) vers le bas à travers l'espace extérieur (150) et le déplacement des deux parties de prise vers le bas au-delà des premier et second tenons (106, 108) ;
• l'écartement de deux parties de prise de l'outil d'expansion associé ;
• l'escamotage des deux parties de prise de l'outil d'expansion associé vers l'arrière vers l'espace extérieur (150) ;
• le déplacement des deux parties de prise l'une vers l'autre, une fois que les deux parties de prise ont dégagé la partie en contre-dépouille (142, 146) de sorte que chaque partie de prise vienne en prise avec une cavité de crochet (134, 136) ;
• le déplacement supplémentaire des deux parties de prise l'une vers l'autre pour déplacer les tenons (106, 108) l'un vers l'autre.
